(19) Europäisches Patentamt
European Patent Office
Office européen des brevets

(11) **EP 4 597 192 A1**

(12) **EUROPEAN PATENT APPLICATION**
published in accordance with Art. 153(4) EPC

(43) Date of publication:
06.08.2025 Bulletin 2025/32

(21) Application number: 23871879.5

(22) Date of filing: 11.09.2023

(51) International Patent Classification (IPC):
$G02B\ 13/14\ ^{(2006.01)}$     $G02B\ 1/04\ ^{(2006.01)}$
$G02B\ 3/08\ ^{(2006.01)}$     $G02B\ 13/18\ ^{(2006.01)}$

(52) Cooperative Patent Classification (CPC):
G02B 1/04; G02B 3/08; G02B 13/14; G02B 13/18

(86) International application number:
PCT/JP2023/033094

(87) International publication number:
WO 2024/070644 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 JP 2022153358

(71) Applicant: KONICA MINOLTA, INC.
Tokyo 100-7015 (JP)

(72) Inventors:
• MORI Hajime
Tokyo 100-7015 (JP)
• IWAMA Masaki
Tokyo 100-7015 (JP)
• AKUTSU Dai
Tokyo 100-7015 (JP)
• IMAZU Yoshifumi
Tokyo 100-7015 (JP)

(74) Representative: Hoffmann Eitle
Patent- und Rechtsanwälte PartmbB
Arabellastraße 30
81925 München (DE)

(54) **INFRARED LENS, INFRARED OPTICAL SYSTEM, AND INFRARED IMAGING DEVICE**

(57) An infrared lens L transmits infrared rays and is made of a resin. Due to this configuration, material costs can be suppressed, and an aspheric surface can be formed due to good moldability. Moreover, the infrared lens L has an average thickness within the optical effective diameter of 0.5 mm or less. Due to this configuration, good infrared transmittance can be obtained. Consequently, an infrared lens L that is suitable for infrared ray applications can be realized.

FIG.1

**Description**

Technical Field

The present invention relates to an infrared lens, an infrared optical system, and an infrared imaging apparatus.

Background Art

In general, an infrared optical system using infrared light (infrared rays) having wavelengths of 3 to 5 $\mu$m and 8 to 14 $\mu$m can sense radiated heat. Such an infrared optical system is utilized as a thermal camera that measures a body temperature without contacting the body. The infrared optical system is also used for monitoring, security, inspection, and so forth since the infrared optical system can measure temperature and is less likely to be influenced by disturbance (e.g., fog, haze, darkness, backlight), which a visible-light optical system is likely to be affected.

However, in spite of such versatility, the infrared optical system has not been widely used because it costs more than the visible light optical system. One main factor of the high cost is expensive lenses.

Known materials of lens for an infrared optical system include Ge, Si, ZnSe, ZnS, chalcogenide glass, and polyethylene resin (PE resin).

Among these, Ge has good infrared transmittance (transmittance of infrared rays). However, Ge costs as a material and has a problem with workability. Si has relatively good infrared transmittance and costs less than Ge as a material but has a problem in workability like Ge. These materials are therefore often used for a spherical lens by polishing but are not suitable for an aspheric surface.

ZnSe, ZnS, and chalcogenide glass have relatively good infrared transmittance and can be formed into an aspheric surface by molding. However, they cost as a material, and they are toxic.

In this regard, PE resin does not cost much as a material and has good formability so that it can be made aspherical. However, the PE resin has low infrared transmittance.

For example, according to the technology described in Patent Literature 1, an imaging optical system is constituted by a single lens made of PE resin. However, to form an image with one lens, the lens requires a thick central part, which decreases infrared transmittance.

Citation List

Patent Literature

[Patent Literature] Japanese Patent No. 5584870

Summary of Invention

Technical Problem

The present invention has been made in view of the above-described circumstances. An object of the present invention is to provide an infrared lens suitable for applications of infrared rays, and an infrared optical system and an infrared imaging apparatus including the infrared lens.

In order to achieve the above objects, the present invention is an infrared lens that transmits infrared rays, wherein:

the infrared lens is made of resin, and
an average thickness of the infrared lens within an optically effective diameter is 0.5 mm or less.

Advantageous Effects of Invention

According to the present invention, an infrared lens suitable for infrared applications can be obtained.

Brief Description of Drawings

[FIG. 1] This is a schematic cross-sectional view of an infrared imaging apparatus according to an embodiment.
[FIG. 2A] This is a graph that shows the effect of the thickness of polyethylene resin on transmittance of the far-infrared region, wherein the graph shows transmittances of the polyethylene resins having different thicknesses in the far-infrared region.
[FIG. 2B] This is a graph showing the effect of the thickness of polyethylene resin on transmittance of the far-infrared region, wherein the graph shows the average transmittance at wavelengths of 8 to 12 $\mu$m.
[FIG. 3A] This is a graph showing the relation between the thickness of the edge part when both ends of the outer peripheral surface are grasped with forceps and the internal stress of the infrared lens.
[FIG. 3B] This is a graph illustrating the relation between the optically effective diameter and the thickness of the edge part for the yield stress or 1/2 of the yield stress.
[FIG. 4] This is an enlarged sectional view of a first infrared lens.
[FIG. 5A] This is a lens configuration diagram and MTF curves for explaining influence of ring-shaped zones on a Fresnel surface, wherein the number of ring-shaped zones is 1.
[FIG. 5B] This is a lens configuration diagram and MTF curves for explaining influence of ring-shaped zones on a Fresnel surface, wherein the number of ring-shaped zones is 2.
[FIG. 5C] This is a lens configuration diagram and MTF curves for explaining influence of ring-shaped zones on a Fresnel surface, wherein the number of ring-shaped zones is 3.

[FIG. 6A] This is an example of a ray diagram of a Fresnel lens, wherein the optical surface opposite to the Fresnel surface is curved.

[FIG. 6B] This is an example of a ray diagram of a Fresnel lens, wherein the optical surface opposite to the Fresnel surface is flat.

[FIG. 7] This is a diagram illustrating a modification example of the infrared optical system according to the embodiment.

[FIG. 8A] This is a diagram illustrating a modification example of the infrared optical system according to the embodiment.

[FIG. 8B] This is a diagram illustrating a modification example of the infrared optical system according to the embodiment.

[FIG. 8C] This is a diagram illustrating a modification example of the infrared optical system according to the embodiment.

[FIG. 9A] This is a configuration having two resin-made infrared lenses and MTF curves.

[FIG. 9B] This is a configuration having one inorganic lens (chalcogenide glass lens) and MTF curves.

[FIG. 10A] This is a configuration having one resin infrared lens and two inorganic lenses (chalcogenide glass lenses) and MTF curves.

[FIG. 10B] This is a configuration having three inorganic lenses (chalcogenide glass lenses) and MTF curves.

[FIG. 11A] This is a diagram for explaining a support structure of an infrared lens and an infrared imaging element when there is one lens.

[FIG. 11B] This is a diagram for explaining a support structure of an infrared lens and an infrared imaging element when there is one lens.

[FIG. 12A] This is a diagram for explaining a support structure of infrared lenses and an infrared imaging element when there are two lenses.

[FIG. 12B] This is a diagram for explaining a support structure of infrared lenses and an infrared imaging element when there are two lenses.

[FIG. 12C] This is a diagram for explaining a support structure of infrared lenses and an infrared imaging element when there are two lenses.

Best mode for carrying out the invention

Hereinafter, embodiments of the present invention will be described with reference to the drawings.

[Overall Configuration of Infrared imaging Apparatus]

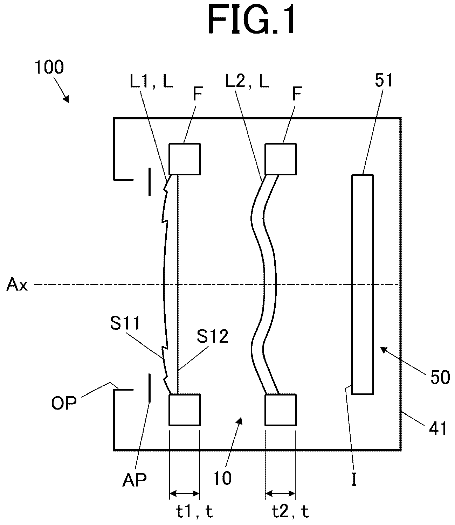

FIG. 1 is a schematic cross-sectional view of an infrared imaging apparatus 100 according to the present embodiment.

The infrared imaging apparatus 100 is an infrared camera that captures and visualizes light rays including infrared rays. The infrared imaging apparatus 100 is used as, for example, a night vision camera or a thermometer. Specifically, as illustrated in FIG. 1, the infrared imaging apparatus 100 includes an infrared optical system 10 and a sensor section 50.

The infrared optical system 10 is a monofocal optical system for forming a subject image on an imaging surface (projection surface) I of the infrared imaging element 51. The infrared optical system 10 is housed in a lens barrel (lens frame) 41. The lens barrel 41 has an opening OP through which light enters from the object side.

The infrared optical system 10 includes at least one infrared lens L (in the present embodiment, two infrared lens).

The detailed configuration of the infrared optical system 10 will be described later.

The sensor section 50 includes the infrared imaging element 51 that captures the subject image formed by the infrared optical system 10.

The infrared imaging element 51 is an imaging element (solid-state imaging element) sensitive to infrared rays. The infrared imaging element 51 is, for example, a thermal microbolometer. The position of the infrared imaging element 51 is fixed with respect to the optical axis Ax of the infrared optical system 10. The infrared imaging element 51 has a conversion part as an imaging surface I. A signal processing circuit (not illustrated) is formed in the periphery thereof. On the conversion part, pixels (i.e., conversion elements) are two-dimensionally arranged. The infrared imaging element 51 is not limited to a thermal-type microbolometer and may incorporate a quantum-type or another thermal-type imaging element.

[Detailed Configuration of Infrared Optical System]

Next, the infrared optical system 10 will be described in more detail.

As shown in FIG. 1, the infrared optical system 10 substantially includes an aperture diaphragm AP and two infrared lenses L (a first infrared lens L1 and a second infrared lens L2) in this order from the object side.

Each of the infrared lenses L transmits infrared rays and is formed of resin. The infrared lenses L made of resin reduce material cost and provide satisfactory formability. In particular, it is preferable to use an olefin-based resin that has low absorption of the infrared region (high-density polyethylene, ultra-high molecular weight PE, TPX, or the like) or a fluorine-based resin.

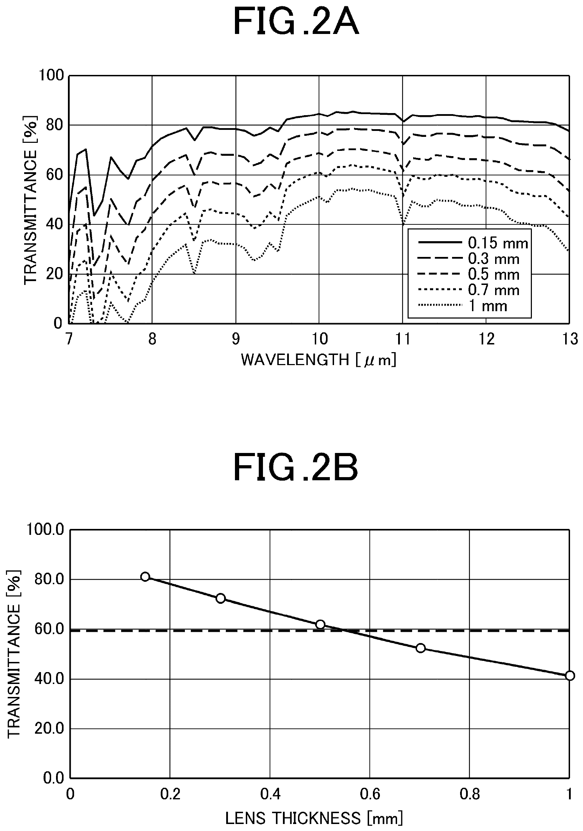

FIG. 2A and FIG. 2B are graphs showing the influence of thicknesses of polyethylene resin on far-infrared transmittance (transmittance of the far-infrared region), based on actually measured values. Among these, FIG. 2A is a diagram illustrating far-infrared transmittance of polyethylene resin having different thicknesses, and FIG. 2B is a diagram illustrating the average far-infrared transmittance at wavelengths of 8 to 12 $\mu$m.

For each of the infrared lenses L, the average thickness in the optically effective diameter is 0.5 mm or less. Thus, as shown in FIG. 2A and FIG. 2B, the far-infrared transmittance can be 60% or greater with a resin lens having transmittance highly sensitive to the thickness due to a large absorption coefficient.

The average thickness in the optically effective diameter of each infrared lens L is preferably 0.3 mm or less, and more preferably 0.2 mm or less. By setting the average thickness to 0.3 mm or less, the far-infrared transmittance can be 70% or greater. By setting the average thickness to 0.2 mm or less, the far-infrared transmittance can be further increased.

In this specification, the "thickness" of a lens (and a part thereof) refers to the thickness in the axial direction along the optical axis Ax, unless otherwise specified. The "optically effective diameter" of a lens refers to the diameter of a bundle of parallel light rays that are emitted from the infinite object point on the optical axis Ax and pass through the optical surface of the lens.

Each infrared lens L has the edge part F having a predetermined thickness on the outer diameter sides of the optical surface (outside the optically effective diameter). If the edge part F is thin, the lens may be deformed or broken when grasped with forceps or the like and is difficult to handle. Therefore, it is preferable that the thickness t (t1, t2) of the edge part F be equal to or greater than a predetermined thickness.

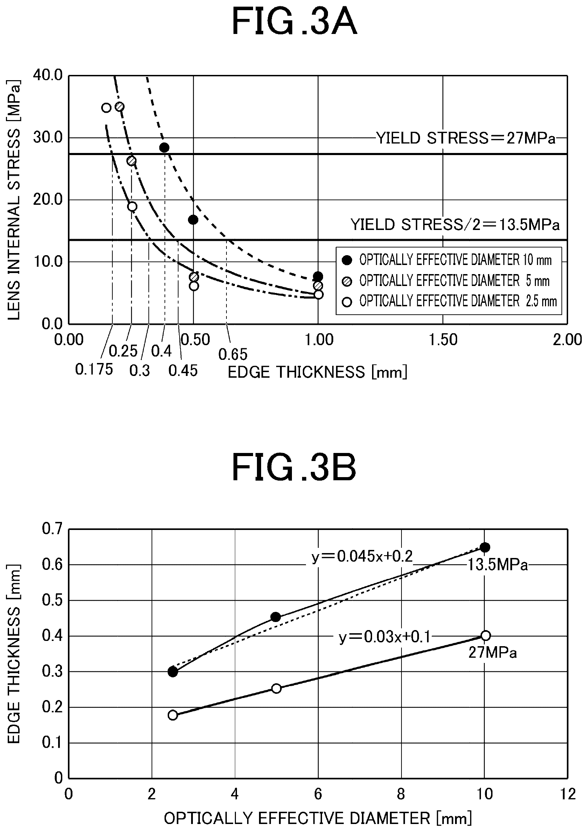

FIG. 3A is a graph illustrating a relation between the thickness t of the edge part F and the internal stress of the infrared lens L when both ends of the outer peripheral surface are held by forceps. The graph is based on structural analysis. Herein, the optical surface diameters are φ10 mm, φ5 mm, and φ2.5 mm; the width of the edge part F in the radial direction is 1 mm; the thickness of the optical surface is 0.3 mm; and the holding force is 1 N. FIG. 3B is a graph illustrating the relation between the optically effective diameter and the thickness of the edge part F for the yield stress or 1/2 of the yield stress.

As illustrated in FIG. 3A, for example, in a case where the infrared lens L is made of polyethylene, consider that the stress at the time of holding is restrained to 27 MPa (the yield stress) or less. To satisfy this, the thickness t of the edge part F need be 0.4 mm or greater when φ10 mm; 0.25 mm or greater for φ5 mm; and 0.175 mm or greater for φ2.5 mm. As illustrated in FIG. 3B, the thickness t [mm] of the edge part F that satisfies the above can be substantially expressed by the following Expression (1) where D [mm] is the optically effective diameter. If is preferable that the thickness t be equal to or greater than the numerical value on the right side of the expression (1).

$$t \geq 0.03D + 0.1 \ \dots \ (1)$$

In anticipation of safety, consider that the stress is restrained to 13.5 MPa or less. To satisfy this, it is necessary to set the thickness t of the edge part F to 0.65 mm or greater for φ10 mm; 0.45 mm or greater for φ5 mm; and 0.3 mm or greater for φ2.5 mm. The thickness t [mm] of the edge part F that satisfies the above can be substantially expressed by the following Expression (2). It is further preferable that the thickness t be equal to or greater than the numerical value on the right side of the expression (2).

$$t \geq 0.045D + 0.2 \ \dots \ (2)$$

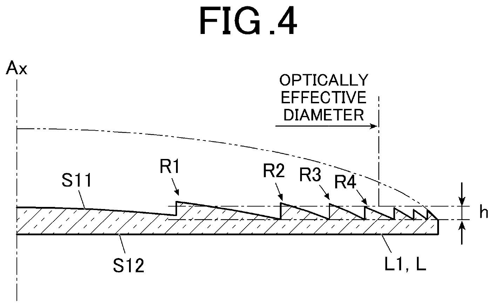

As shown in FIG. 4, the object side surface (the optical surface on the object side) S11 of the first infrared lens L1 is a Fresnel lens having ring-shaped zones in a peripheral portion. The cross section of the ring-shaped zones looks like saw-teeth. Therefore, even in a case where the first infrared lens L1 needs to have power, the first infrared lens L1 can be made thin and can secure high infrared transmittance.

More specifically, the Fresnel object side surface S11 has four or less ring-shaped zones R (in the example of FIG. 4, a first ring-shaped zone R1 to a fourth ring-shaped zone R4) within the optically effective diameter. That is, the number of divisions of the ring-shaped zones R is five or less. Herein, a "ring-shaped zone" of the Fresnel surface refers to a portion having an optically effective size among ring-shaped saw-teeth portions around the optical axis Ax as the center. In the present embodiment, the term "ring-shaped zone" refers to a portion having a height "h" of 0.02 mm or greater in the axial direction.

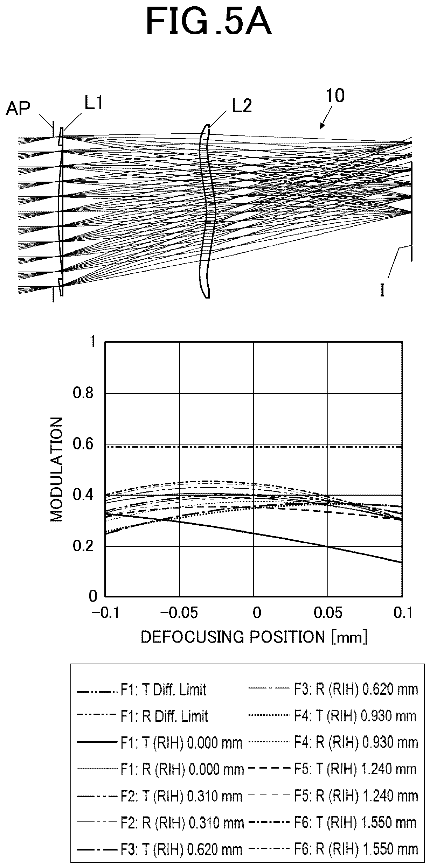

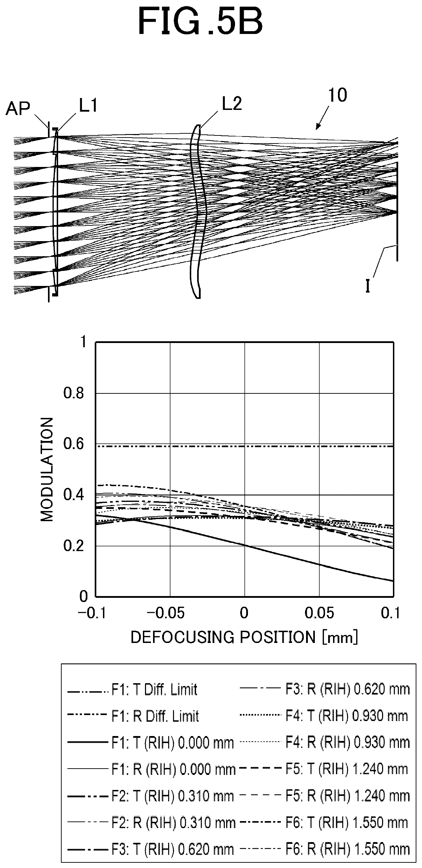

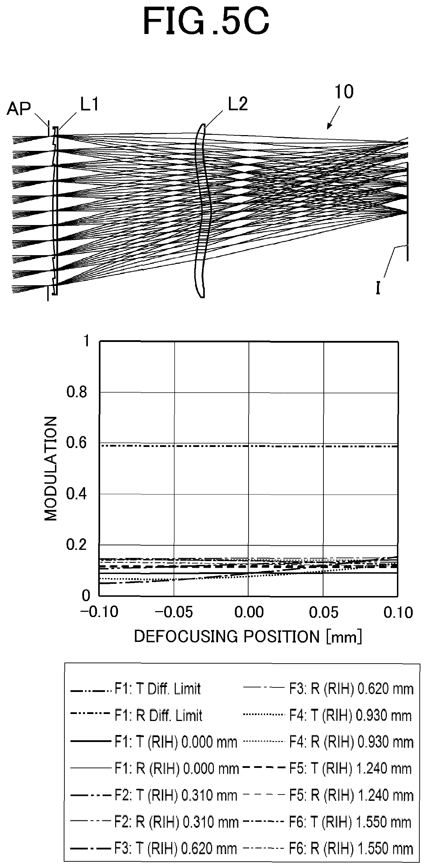

FIG. 5A to FIG. 5C are configuration diagrams and MTF curves for explaining the influence of the ring-shaped zones R on the Fresnel surface of a resin Fresnel lens having an average thickness of 0.2 mm in the optically effective diameter. FIG. 5A corresponds to one ring-shaped zone (the number of divisions: 2). FIG. 5B corresponds to two ring-shaped zones 2 (the number of divisions: 3). FIG. 5C corresponds to three ring-shaped zones (the number of divisions: 4). In the lens configuration diagrams of FIG. 5A to FIG. 5C, the edge part F is omitted.

As shown in these figures, the ring-shaped zones R of the Fresnel surface causes a phase difference, so that the optical performance changes, depending on the number of ring-shaped zones R and the positions thereof in the radial direction. Specifically, the less the number of ring-shaped zones is or the farther the ring-shaped zones R are from the optical axis Ax, the better the optical performance is. In the present embodiment, as described above, the number of ring-shaped zones within the optically effective diameter is four or less. Further, the first ring-shaped zone R1 on the innermost diameter side is positioned outside 50% of the optically effective diameter. However, the number of the ring-shaped zones R and the positions in the radial direction thereof are not particularly limited.

Further, if the ring-shaped zones R on the Fresnel surface are inside the diameter of the aperture diaphragm AP, the optical performance may decrease. Therefore, in the present embodiment, the diameter of the second ring-shaped zone R2, which is the second from the inner diameter side, is greater than the diameter (inner diameter) of the aperture diaphragm AP. Thus, the decrease of the performance is minimized.

That is, it is preferable that the number of ring-shaped zones be small and further preferable that the number of ring-shaped zones in the aperture diaphragm AP be small. Further, it is preferable that the ring-shaped zones R be farther from the optical axis Ax. It is preferable that the number of ring-shaped zones in the optically effective diameter be four or less. It is preferable that the number of ring-shaped zones in the diameter of the aperture diaphragm AP be one or less (diameter of aperture diaphragm < diameter of second ring-shaped zone). It is preferable that the first ring-shaped zone be outside the 50% of the effective diameter (optically effective diameter/2 < diameter of first ring-shaped zone). It is preferable that at least one of these be satisfied and further preferable that all of these be satisfied.

FIG. 5A to FIG. 5C shows the case where the lens has a mean thickness of 0.2 mm as an example. However, the thickness of the lens does not affect the tendency of the performance according to the positions of the ring-shaped zones and the number of ring-shaped zones described above.

The image side surface S12 (optical surface on the image side) of the Fresnel first infrared lens L 1 has a flat shape substantially perpendicular to the optical axis Ax.

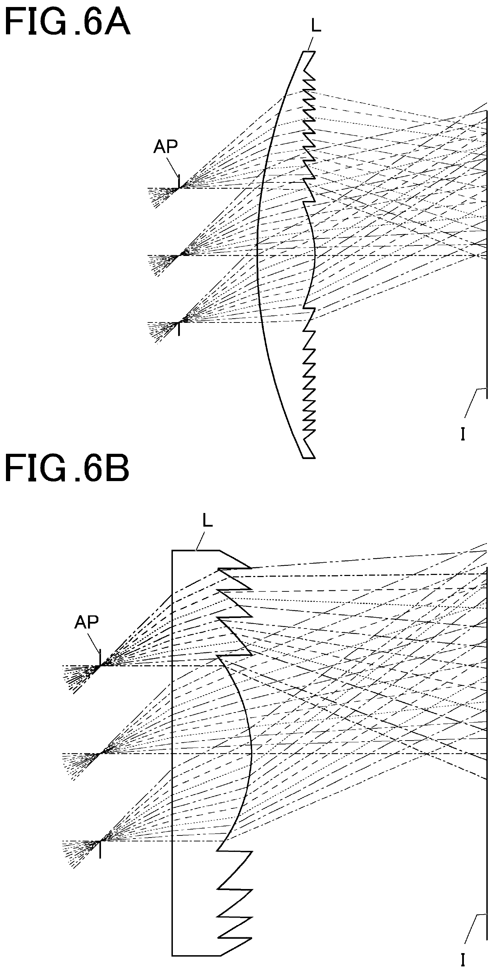

FIG. 6A and FIG. 6B diagrams illustrating examples of light rays of a Fresnel lens. FIG. 6A is a Fresnel lens having a curved optical surface opposite the Fresnel surface. FIG. 6B is a Fresnel lens having a flat optical surface opposite the Fresnel surface.

As illustrated in FIG. 6A, in a case where the optical surfaces are a curved surface and a Fresnel surface, the thickness deviation (thickness difference) between the central part and the peripheral part is large, although the design is possible. Therefore, disadvantages such as the occurrence of an infrared transmittance difference and decrease in formability occur.

On the other hand, as illustrated in FIG. 6B, in a case where the optical surfaces are a plane surface and a Fresnel surface, the thickness deviation (thickness difference) between the central part and the peripheral part can be decreased. Therefore, it is possible to equalize infrared transmittance, improve the formability, and reduce the number of ring-shaped zones. Particularly, from the viewpoint of the influence on infrared transmittance, it is preferable that the image side surface S12 be close to a flat surface having the sag amount of 0.1 or less from a plane orthogonal to the optical axis Ax within the optically effective diameter.

Although FIG. 5A to FIG. 5C illustrate the case where the image side surface is a Fresnel surface as an example, the above description can be applied to the case where the object side surface is a Fresnel surface as illustrated in FIG. 1. When the infrared lens L is a Fresnel lens, any of the optical surfaces may be a Fresnel surface, as described later.

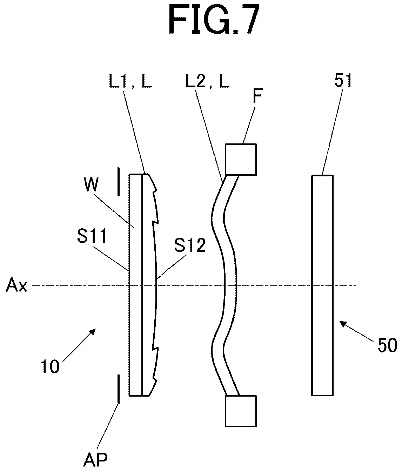

FIG. 7 is a view illustrating a modification example of the infrared optical system 10.

As shown in this figure, the first infrared lens L1 may have an integrally formed window member W on the side opposite the Fresnel surface. The window member W is formed of a general-purpose material that transmits infrared rays (for example, an inorganic material containing Ge, Si, chalcogenide glass, or ZnS as a main component).

By providing the window member W integrally with the first infrared lens L1 (Fresnel lens), the height of the first infrared lens L1 can be reduced, and the rigidity thereof can be increased, when an optical window is required.

As shown in FIG. 1, at least either of the optical surfaces (both optical surfaces in the present embodiment) of the second infrared lens L2 has an aspheric shape having an inflection point(s). In other words, at least either of the optical surfaces has a portion where an angle formed by a normal of the surface and the optical axis becomes smaller after becoming greater or becomes greater after becoming smaller. More preferably, at least either of the optical surfaces has an extreme value. The "extreme value" refers to a point on the curve of the aspheric surface of the cross-sectional shape of the second infrared lens L2 within the optically effective diameter. At the extreme value, the tangent plane on the vertex of the aspheric surface is perpendicular to the optical axis Ax. Accordingly, it is possible to satisfactorily correct astigmatism and so forth.

The second infrared lens L2 has a thickness deviation ratio (minimum thickness/maximum thickness) greater than or equal to 0.5 in the optically effective diameter. As a result, excessive thickness deviation is suppressed, and variation in the infrared transmittance of the entire second infrared lens L2 can be suppressed.

The number of infrared lenses L in the infrared optical system 10 is not particularly limited if the infrared optical system 10 includes at least one infrared lens L.

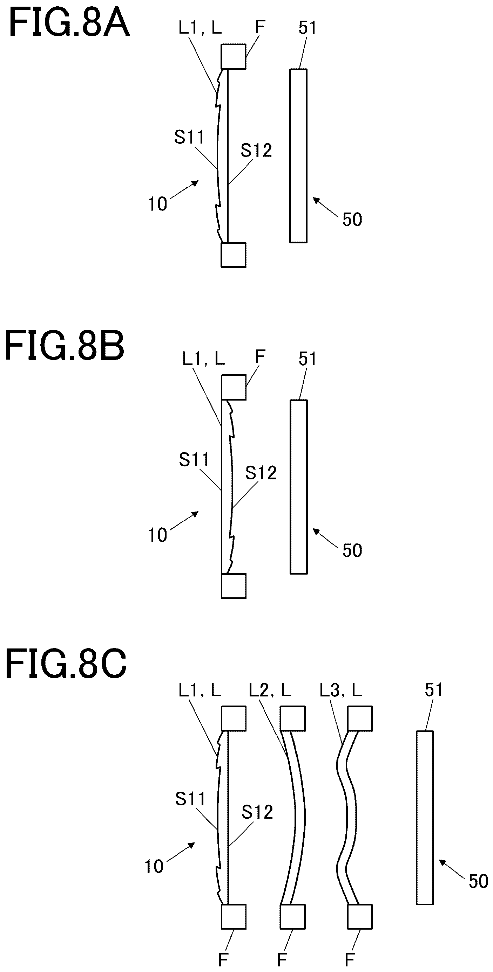

When the infrared optical system 10 includes one lens, the infrared lens L may be a Fresnel lens like the first infrared lens L1 to ensure power, as illustrated in FIG. 8A and FIG. 8B. The Fresnel surface may be the object side surface S11 or the image side surface S12. The infrared optical system 10 including one Fresnel lens can achieve both infrared transmittance and resolution performance.

In a case where desired performance is not obtained by the infrared optical system 10 including one lens, there may be multiple infrared lens L as in the present embodiment, for example. In this case, as shown in FIG. 8C, three or more infrared lenses L may be provided.

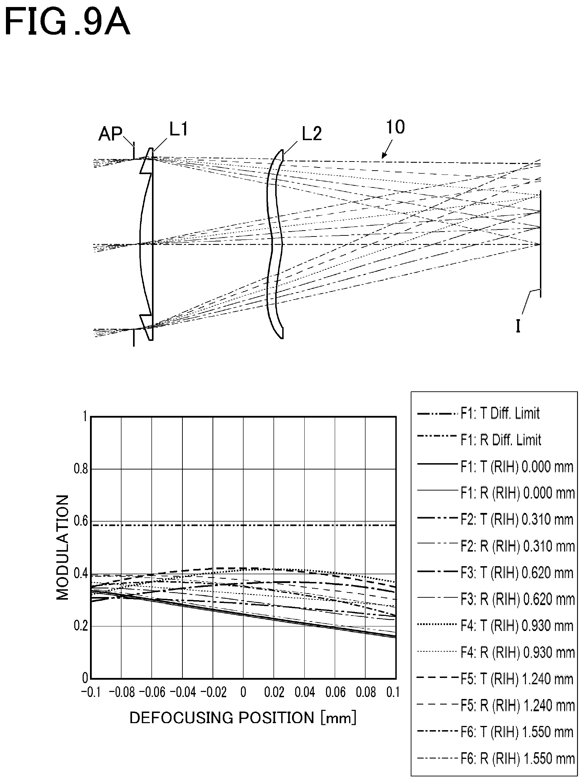

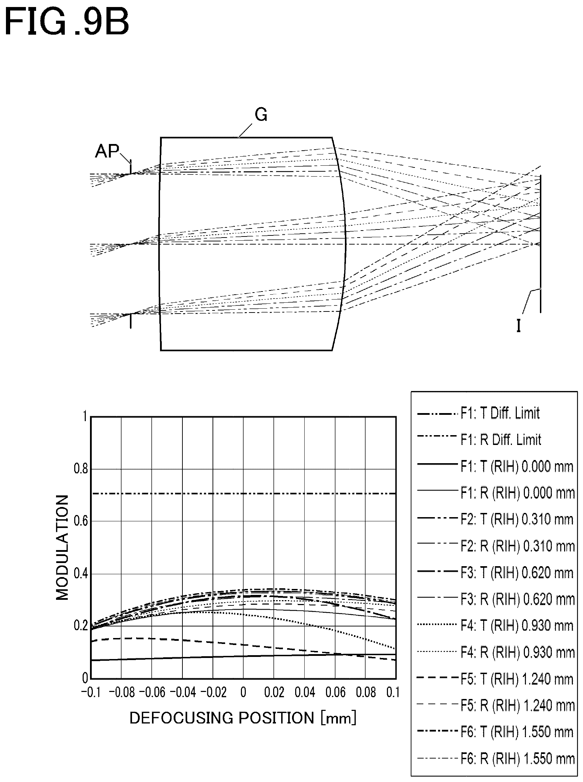

Specifically, a configuration including two resin-made infrared lenses L (FIG. 9A) is expected to have performance equal to or higher than the performance of a configuration including one thick inorganic lens G (FIG. 9B). That is, performance can be maximized by using a Fresnel lens when a lens is required to have power and using an aspherical lens without Fresnel when a lens is not required to have so much power.

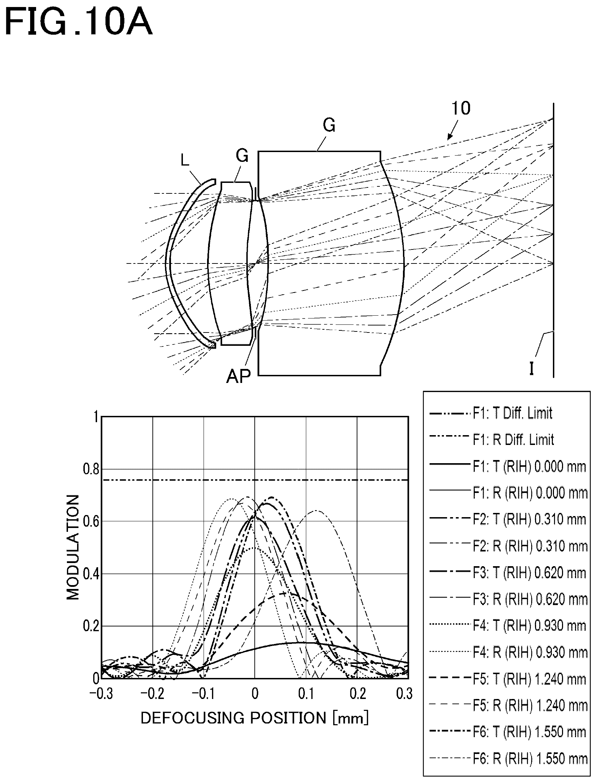

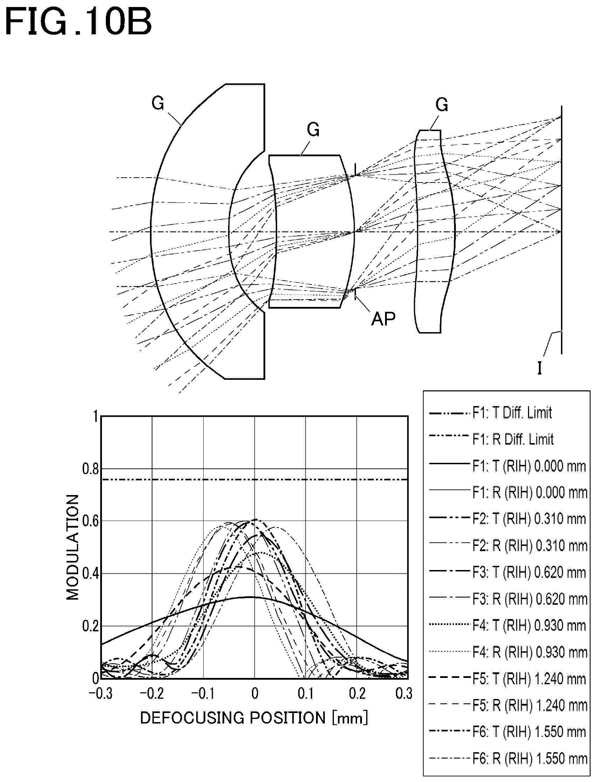

Further, as illustrated in FIG. 10A, a resin-made infrared lens L may be combined with an inorganic lens G (two lenses in the example of FIG. 10A). Such a configuration is also expected to have performance substantially equal to the performance of a configuration including only inorganic lenses G as illustrated in FIG. 10B (three lenses in the example of FIG. 10B). Combining an infrared lens L made of resin with a lens made of an inorganic material (e.g., Ge, chalcogenide glass, or ZnS as a main component) can reduce weight, height, and cost.

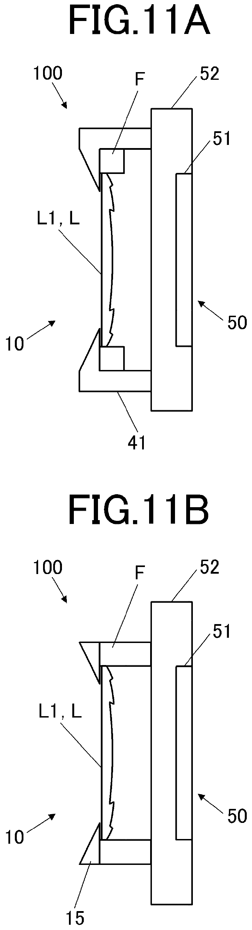

When a configuration includes one infrared lens L, the positions of the infrared lens L and the infrared imaging element 51 in the axial direction and the radial direction may be determined by the lens barrel 41, as shown in FIG. 11A. The lens barrel 41 is fixed to a sensor box 52 that supports the infrared imaging element 51. For example, the edge part F of the infrared lens L is held (fixed) by the lens barrel 41.

For another example, as illustrated in FIG. 11B, the edge part F of the infrared lens L (or the outer peripheral part of the lens corresponding to the edge part F) may be directly fixed to the sensor box 52 without the lens barrel 41 in between. In this case, the lens barrel 41 may be omitted while leaving a light shielding member 15 that shields the outer peripheral part on the object side of the first infrared lens L1 from light. Thus, as compared with the case where the lens barrel 41 is interposed, it is possible to eliminate factors of decrease in positioning accuracy due to a fixing structure (e.g., adhesion) between the lens barrel 41 and the infrared lens L. Consequently, the positioning accuracy of the infrared lens L can be improved.

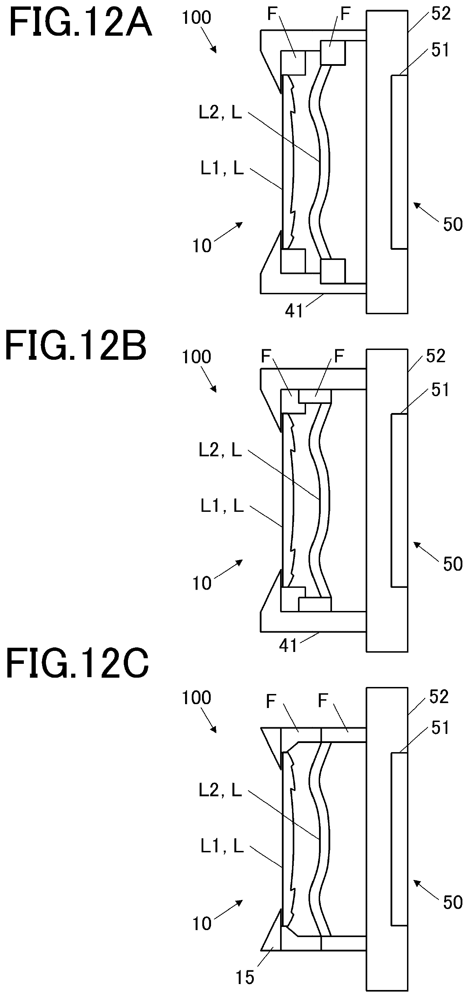

In a case where multiple infrared lenses L are provided, as illustrated in FIG. 12A, the positions of the infrared lenses L and the infrared imaging element 51 in the axial direction and the radial direction can be fixed by the lens barrel 41. Each infrared lens L is individually supported (fixed) by the lens barrel 41.

For another example, as shown in FIG. 12B, the edge parts F (or the outer peripheral portions of the lenses corresponding to the edge parts F) of two (multiple) adjacent infrared lenses L may be supported (fixed) to each other. The positions of the two (multiple) infrared lenses L are directly fixed without the lens barrel 41 in between. Thus, as compared with the case where the lens barrel 41 is interposed, it is possible to eliminate factors of decrease in positioning accuracy due to a fixing structure (e.g., adhesion) between the lens barrel 41 and the infrared lens L. Consequently, the positioning accuracy of the infrared lens L can be improved. Further, the shape of the lens barrel 41 can be simplified by eliminating the shape to be engaged with the edge part F of the second infrared lens L2

Further, as shown in FIG. 12C, the edge part F (or the lens outer peripheral part corresponding to the edge part F) of each infrared lens L may be directly fixed to (the edge part F of) the adjacent infrared lens L and the sensor box 52. In this case, the lens barrel 41 may be omitted while leaving a light shielding member 15 that shields the outer peripheral part on the object side of the first infrared lens L1 from light. Thus, as compared with the case where the lens barrel 41 is interposed, it is possible to eliminate factors of decrease in positioning accuracy due to a fixing structure (e.g., adhesion) between the lens barrel 41 and the infrared lens L. Consequently, the positioning accuracy of the infrared lens L can be improved. Further, by centering (fitting) the adjacent infrared lenses L, it is possible to suppress the eccentricity among the infrared lenses L.

Although FIG. 12A to FIG. 12C show the case where two infrared lenses L are provided, a configuration including three or more infrared lenses L can be configured similarly. Further, the infrared lens L may be fixed by fixing the edge part F in at least either the radial direction or the axial direction.

[Technical Effects of the Present Embodiment]

As described above, according to the present embodiment, the infrared lens L that transmits infrared rays is formed of resin. Thus, the material cost can be suppressed, and an aspheric surface can be formed due to good formability.

The average thickness within the optically effective diameter of the infrared lens L is less than or equal to 0.5 mm. Thus, satisfactory infrared transmittance can be obtained.

Therefore, the infrared lens L suitable for infrared applications can be obtained.

According to the present embodiment, by setting the average thickness within the optically effective diameter to 0.3 mm or less, more favorable infrared transmittance can be obtained.

Furthermore, the thickness of the edge part F of the infrared lens L located on the outer diameter side relative to the optical surface is set so as to satisfy the above expression (1). Thus, even when the edge part F is grasped with tweezers or the like, internal stress can be favorably suppressed.

According to the present embodiment, by setting the average thickness within the optically effective diameter to 0.2 mm or less, further favorable infrared transmittance can be obtained.

The thickness of the edge part F of the infrared lens L located on the outer diameter side relative to the optical surface is set to satisfy Expression (2) described above. As a result, even when the edge part F is held by tweezers or the like, the internal stress can be suppressed more favorably.

Further, according to the present embodiment, one optical surface of the first infrared lens L1 is a Fresnel surface. As a result, the lens can be thin while ensuring power and infrared transmittance.

Further, according to the present embodiment, the other optical surface of the first infrared lens L1 opposite the Fresnel surface has the sag amount of 0.1 mm or less from the plane perpendicular to the optical axis Ax. When the optical surface opposite the Fresnel surface is close to a plane, the thickness deviation (thickness difference) between the central portion and the peripheral portion can be suppressed. Thus, the infrared transmittance can be made uniform, the formability can be improved, and the number of ring-shaped zones can be reduced.

Further, according to the present embodiment, the number of ring-shaped zones R in the optically effective diameter on the Fresnel surface is four or less. By reducing the number of ring-shaped zones, the optical performance can be improved.

Further, according to the present embodiment, the first ring-shaped zone R1 at the innermost diameter side of the Fresnel surface is located outside the 50% of the optically effective diameter. By forming the ring-shaped zones R at positions far from the optical axis Ax, optical performance can be improved.

Furthermore, according to the present embodiment, the first infrared lens L1 has the window member W integrally formed on the side opposite the Fresnel surface. Thus, in a case where an optical window is required, the height of the infrared lens L can be reduced, and the rigidity of the infrared lens L can be improved.

Further, according to the present embodiment, the window member W is formed of an inorganic material containing Ge, Si, chalcogenide glass, or ZnS as a main component. That is, a general-purpose material that transmits infrared rays can be used for the window member W.

Further, according to the present embodiment, at least either of the optical surfaces of the second infrared lens L2 has an aspherical shape having an inflection point. Accordingly, it is possible to satisfactorily correct astigmatism and so forth. Since the infrared lens L is made of resin to ensure workability (formability), an aspheric surface can be formed.

Further, according to the present embodiment, the second infrared lens L2 has the thickness deviation ratio greater than or equal to 0.5 in the optically effective diameter. The thickness deviation ratio is obtained by dividing the minimum thickness by the maximum thickness. As a result, excessive thickness deviation of the second infrared lens L2 can be suppressed, and variations in infrared transmittance of the entire second infrared lens L2 can be suppressed.

Further, according to the present embodiment, the infrared lens L is formed of an olefin-based resin or a fluorine-based resin. By using these resins having low absorption in the infrared region, good infrared transmittance can be obtained.

According to the present embodiment, the infrared optical system 10 includes one infrared lens L that has a Fresnel surface as one optical lens. The infrared optical system 10 including one thin Fresnel lens can achieve both infrared transmittance and resolution performance.

According to the present embodiment, the infrared optical system 10 includes the infrared lens L having the window member W made of resin. That is, all the infrared lenses L including the infrared lens having the window member W are made of resin. thus, the cost and weight of the infrared optical system 10 can be reduced.

Further, according to the present embodiment, the infrared optical system 10 includes an infrared lens L one optical surface of which is a Fresnel surface and an infrared lens L that has an aspherical shape on at least either of its optical surfaces. That is, performance can be maximized by using a Fresnel lens when a lens is required to have power and using an aspherical lens without Fresnel when a lens is not required to have so much power.

Further, according to the present embodiment, the infrared optical system 10 includes the inorganic lens G in addition to the infrared lens L. The inorganic lens G is made of an inorganic material containing Ge, chalcogenide glass, or ZnS as a main component. Combining the infrared lens L made of resin with the inorganic lens can reduce weight, height, and cost.

Further, according to the present embodiment, the diameter of the second ring-shaped zone R2, which is the second from the inner radius side, on the Fresnel surface of the first infrared lens L1 is greater than the diameter of the aperture diaphragm AP. Thus, it is possible to suppress degradation of optical performance that may occur when the ring-shaped zones R on the Fresnel surface are arranged inside the diameter of the aperture diaphragm AP.

Further, according to the present embodiment, the position of the infrared lens L with respect to a different adjacent infrared lens L or the infrared imaging element 51 is determined by the edge part F (the outer peripheral part) of the infrared lens L. The edge part F (outer peripheral part) is located on the outer diameter of the optical surface of the infrared lens L. That is, the distance between the infrared lenses L or the distance between the infrared lens L and the infrared imaging element 51 can be determined by the shape of the lens. Thus, the positioning accuracy of the infrared lens L can be improved to achieve stable assembly, and the configuration can be simplified except at least part of the lens barrel 41.

Although an embodiment of the present invention has been described, the above-described embodiment does not limit embodiments to which the present invention is applicable and can be appropriately modified without departing from the scope of the present invention.

For example, in the above-described embodiment, the infrared optical system 10 is used in the infrared imaging apparatus 100 as an example. However, the use of the infrared lens and the infrared optical system according to the present invention is not particularly limited, and the infrared lens and the infrared optical system are also suitably applicable to uses other than imaging, such as light projection, illumination, and light collection.

Industrial Applicability

As described above, the present invention is useful for obtaining an infrared lens suitable for infrared applications.

Reference Signs List

    100 Infrared imaging apparatus
    10 Infrared optical system
    15 Light shielding member
    41 Lens barrel
    51 Infrared imaging element (imaging element)
    52 Sensor box
    AP Aperture diaphragm
    Ax Optical axis
    F Edge part (outer peripheral part)
    G Inorganic lens
    L Infrared lens
    L1 First infrared lens
    L2 Second infrared lens
    L3 Third infrared lens
    R Ring-shaped zone
    R1 First ring-shaped zone
    R2 Second ring-shaped zone
    S11 Object side surface (Fresnel surface)
    S12 Image side surface
    W window member

**Claims**

1. An infrared lens that transmits infrared rays, wherein:

    the infrared lens is made of resin, and
    an average thickness of the infrared lens within an optically effective diameter is 0.5 mm or less.

2. The infrared lens according to claim 1, wherein:

    the infrared lens has an edge part located on an outer diameter side than an optical surface,
    the average thickness of the infrared lens within the optically effective diameter is 0.3 mm or less, and
    a thickness t of the edge part satisfies a following expression (1):

$$t \geq 0.03D + 0.1 \ ... \ (1)$$

    where D is the optically effective diameter of the infrared lens.

3. The infrared lens according to claim 2, wherein the average thickness of the infrared lens within the optically effective diameter is 0.2 mm or less.

4. The infrared lens according to claim 2, wherein the thickness t of the edge part satisfies a following expression (2):

$$t \geq 0.045D + 0.2 \ ... \ (2)$$

    where D is the optical effective diameter of the infrared lens.

5. The infrared lens according to claim 1, wherein either of optical surfaces of the infrared lens is a Fresnel surface.

6. The infrared lens according to claim 5, wherein an optical surface opposite the Fresnel surface has a sag amount of 0.1 mm or less from a plane perpendicular to an optical axis.

7. The infrared lens according to claim 5, wherein the Fresnel surface has four or less ring-shaped zones within the optically effective diameter.

8. The infrared lens according to claim 5, wherein a first ring-shaped zone at an innermost diameter side of the Fresnel surface is positioned outside 50% of the optically effective diameter.

9. The infrared lens according to claim 5, wherein the infrared lens has a window member on a side opposite the Fresnel surface, the window member being integrally formed with the infrared lens.

10. The infrared lens according to claim 9, wherein the window member is made of an inorganic material containing Ge, Si, chalcogenide glass, or ZnS as a main component.

11. The infrared lens according to claim 1, wherein at least either of optical surfaces of the infrared lens is aspherical and has an inflection point.

12. The infrared lens according to claim 11, wherein a thickness deviation ratio within the optically effective diameter is 0.5 or greater, the thickness deviation ratio being obtained by dividing a minimum thickness by a maximum thickness.

13. The infrared lens according to claim 1, wherein the infrared lens is made of olefin-based resin or fluorine-based resin.

14. An infrared optical system comprising at least one infrared lens according to claim 1.

15. The infrared optical system according to claim 14, comprising the one infrared lens, either of optical surfaces of the infrared lens being a Fresnel surface.

16. The infrared optical system according to claim 14, wherein the infrared lens includes an infrared lens having an integrally formed window member made of resin.

17. The infrared optical system according to claim 14, wherein the infrared lens includes:

one lens that has a Fresnel surface on either of optical surfaces; and
a different lens that has an aspherical shape on at least either of optical surfaces.

18. The infrared optical system according to claim 14, further comprising, in addition to the infrared lens, an inorganic lens made of an inorganic material containing Ge, chalcogenide glass, or ZnS as a main component.

19. The infrared optical system according to claim 14, further comprising an aperture diaphragm, wherein:

the infrared lens includes an infrared lens that has a Fresnel surface on either of optical surfaces, and
on the Fresnel surface, a diameter of a second ring-shaped zone that is second from an inner diameter side is greater than a diameter of the aperture diaphragm.

20. An infrared imaging apparatus comprising:

the infrared optical system according to claim 14; and
an imaging element that detects an image formed by the infrared optical system.

21. The infrared imaging apparatus according to claim 20, wherein:

the infrared lens has an outer peripheral part located on an outer diameter side of an optical surface, and
the outer peripheral part determines positions of the infrared lens and a different infrared lens or the imaging element adjacent to the infrared lens.

# FIG.1

# FIG.2A

# FIG.2B

# FIG.3A

# FIG.3B

# FIG.4

# FIG.5A

| | |
|---|---|
| —·—··— F1: T Diff. Limit | —·— F3: R (RIH) 0.620 mm |
| —·····— F1: R Diff. Limit | ············ F4: T (RIH) 0.930 mm |
| —— F1: T (RIH) 0.000 mm | ·········· F4: R (RIH) 0.930 mm |
| —— F1: R (RIH) 0.000 mm | — — — F5: T (RIH) 1.240 mm |
| —··— F2: T (RIH) 0.310 mm | — — — F5: R (RIH) 1.240 mm |
| —··— F2: R (RIH) 0.310 mm | —··—··— F6: T (RIH) 1.550 mm |
| —·— F3: T (RIH) 0.620 mm | —····—·· F6: R (RIH) 1.550 mm |

# FIG.5B

# FIG.5C

| | |
|---|---|
| —··—·· F1: T Diff. Limit | —·— F3: R (RIH) 0.620 mm |
| —·---- F1: R Diff. Limit | ············ F4: T (RIH) 0.930 mm |
| ——— F1: T (RIH) 0.000 mm | ········· F4: R (RIH) 0.930 mm |
| ———— F1: R (RIH) 0.000 mm | — — — F5: T (RIH) 1.240 mm |
| —···— F2: T (RIH) 0.310 mm | – – – – F5: R (RIH) 1.240 mm |
| —··— F2: R (RIH) 0.310 mm | —·--·-- F6: T (RIH) 1.550 mm |
| —·— F3: T (RIH) 0.620 mm | —·--·-- F6: R (RIH) 1.550 mm |

## FIG.6A

## FIG.6B

# FIG.7

## FIG.8A

L1, L    F    51

S11    S12

10    50

## FIG.8B

L1, L    F    51

S11    S12

10    50

## FIG.8C

L1, L    L2, L    L3, L    51

S11    S12

10    50

F    F    F

# FIG.9A

# FIG.9B

Legend:
- F1: T Diff. Limit
- F1: R Diff. Limit
- F1: T (RIH) 0.000 mm
- F1: R (RIH) 0.000 mm
- F2: T (RIH) 0.310 mm
- F2: R (RIH) 0.310 mm
- F3: T (RIH) 0.620 mm
- F3: R (RIH) 0.620 mm
- F4: T (RIH) 0.930 mm
- F4: R (RIH) 0.930 mm
- F5: T (RIH) 1.240 mm
- F5: R (RIH) 1.240 mm
- F6: T (RIH) 1.550 mm
- F6: R (RIH) 1.550 mm

# FIG.10A

# FIG.10B

EP 4 597 192 A1

# FIG.11A

# FIG.11B

24

# FIG.12A

100  F  F  52
51
L2, L
L1, L
10  50
41

# FIG.12B

100  F  F  52
51
L2, L
L1, L
10  50
41

# FIG.12C

100  F  F  52
51
L2, L
L1, L
10  50
15

## INTERNATIONAL SEARCH REPORT

| International application No. |
| --- |
| **PCT/JP2023/033094** |

| A. | CLASSIFICATION OF SUBJECT MATTER |
| --- | --- |

*G02B 13/14*(2006.01)i; *G02B 1/04*(2006.01)i; *G02B 3/08*(2006.01)i; *G02B 13/18*(2006.01)i
FI: G02B13/14; G02B1/04; G02B3/08; G02B13/18

According to International Patent Classification (IPC) or to both national classification and IPC

| B. | FIELDS SEARCHED |
| --- | --- |

Minimum documentation searched (classification system followed by classification symbols)

G02B13/14; G02B1/04; G02B3/08; G02B13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-126108 A (NISSEI TECHNOLOGY CORP.) 20 August 2020 (2020-08-20) paragraph [0015], examples 3, 4 | 1, 5-8, 11-12, 14-15, 17, 19-21 |
| Y | | 2-4, 9-10, 13, 16, 18 |
| Y | JP 2009-199073 A (FUJINON CORP.) 03 September 2009 (2009-09-03) fig. 2 | 2-4 |
| Y | WO 2021/095090 A1 (OLYMPUS CORP.) 20 May 2021 (2021-05-20) fig. 1 | 9-10, 16 |
| Y | WO 2011/056396 A2 (3M INNOVATIVE PROPERTIES CO.) 12 May 2011 (2011-05-12) fig. 1, 2 | 9-10, 16 |
| Y | JP 2016-139093 A (KONICA MINOLTA, INC.) 04 August 2016 (2016-08-04) paragraph [0035] | 13 |
| Y | JP 2012-141522 A (SONY CORP.) 26 July 2012 (2012-07-26) paragraphs [0004], [0024], [0032], examples 1-3 | 13, 18 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 September 2023** | **10 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/033094**

| Patent document cited in search report | | | Publication date (day/month/year) | Patent family member(s) | | | Publication date (day/month/year) |
|---|---|---|---|---|---|---|---|
| JP | 2020-126108 | A | 20 August 2020 | (Family: none) | | | |
| JP | 2009-199073 | A | 03 September 2009 | US | 2010/0296181 | A1 | |
| | | | | fig. 2 | | | |
| | | | | WO | 2009/093739 | A1 | |
| | | | | KR | 10-2010-0099744 | A | |
| | | | | CN | 101925838 | A | |
| | | | | TW | 200937036 | A | |
| WO | 2021/095090 | A1 | 20 May 2021 | US | 2022/0214534 | A1 | |
| | | | | fig. 1 | | | |
| WO | 2011/056396 | A2 | 12 May 2011 | US | 2012/0204566 | A1 | |
| | | | | TW | 201130869 | A | |
| JP | 2016-139093 | A | 04 August 2016 | (Family: none) | | | |
| JP | 2012-141522 | A | 26 July 2012 | US | 2012/0176668 | A1 | |
| | | | | paragraphs [0003], [0058], [0059], [0072], examples 1-3 | | | |
| | | | | CN | 102591012 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5584870 B